# EUROPEAN PATENT SPECIFICATION

(11) **EP 1 737 650 B1**
(45) Date of publication and mention of the grant of the patent: **01.07.2009**
(21) Application number: 05704896.9
(22) Date of filing: 03.01.2005
(51) Int. Cl.: B32B 5/28, B29C 70/46

(54) **MULTILAYER PRODUCT MADE OUT OF A SUBSTRATE AND ON EITHER SIDE AT LEAST ONE COVER LAYER; PROCESS FOR THE MANUFACTURE OF A MULTILAYER PRODUCT AND PAINTED MULTILAYER PRODUCT AND PROCESS FOR PAINTING A MULTILAYER PRODUCT**
AUS EINEM SUBSTRAT UND AUF EINER SEITE MINDESTENS EINER DECKSCHICHT HERGESTELLTES MEHRLAGIGES PRODUKT, VERFAHREN ZUR HERSTELLUNG EINES MEHRLAGIGEN PRODUKTS UND ANGESTRICHENES MEHRLAGIGES PRODUKT UND VERFAHREN ZUM ANSTREICHEN EINES MEHRLAGIGEN PRODUKTS
PRODUIT MULTICOUCHE CONSTITUE D'UN SUBSTRAT ET D'AU MOINS UNE COUCHE DE COUVERTURE DE CHAQUE COTE; PROCEDE POUR LA FABRICATION D'UN PRODUIT MULTICOUCHE, AINSI QUE PROCEDE DE PEINTURE D'UN PRODUIT MULTICOUCHE ET PRODUIT MULTICOUCHE PEINT ASSOCIE

(30) Priority: 14.01.2004 US 757079
(43) Date of publication of application: 03.01.2007
(73) Proprietor: B.I. Group Plc, Minworth, Sutton Coldfield West Midlands B75 1BA (GB)
(72) Inventor: BIRRELL, Michael Ian, Guilden Morden, Royston, Herts, SG8 0JP (GB)
(74) Representative: Gosnall, Toby
(86) International application number: PCT/US2005/000052
(87) International publication number: WO 2005/070664

(56) References cited:
- EP-A1- 0 434 846
- EP-A2- 0 259 121
- EP-A2- 0 697 275
- WO-A1-02/076711
- US-A- 4 931 358

## Description

### BACKGROUND OF THE INVENTION

Glass fibre reinforce products are generally known. They are used for many purposes. One class of glass fibre reinforced products consists of sheet like products with randomly distributed fibres embedded in a thermoplastic resin. Depending on their process of manufacture they can be rather densely packed resulting in sheet with a density of more than 1.00 gram per cm³, usually more than 1.20 grams per cm³ or in loosely packed sheet structures with a density of less than 1.20, usually less than 1.00 grams per cm³.

The present invention deals with products having a substrate made out of the loosely packed sheet structures.

Said loosely packed sheet structures have outstanding strength to weight ratio making them suitable for many applications.

In some applications it is however desirable to improve the stiffness and the surface quality of the known loosely packed structures further.

It is known to improve the surface quality of fibre-reinforced sheet by covering the sheet with a layer or film of a thermoplastic not containing any fibres. Upon further processing of the thus covered sheet, in particular when heating it the fibres of the sheet tend to protrude through the surface of the cover layer thus diminishing the surface quality again.

To increase the mechanical properties of thermoplastic materials reinforced with glass fibres it has been proposed to cover the thermoplastic sheet with layers of materials containing aligned high performance fibres.

### SUMMARY OF THE INVENTION

The multilayer product of the invention comprises a substrate in the form of a glass fibre reinforced thermoplastic product with randomly distributed fibres and with a density of less than 1.20 grams per cm³, preferably less than 1.00 grams per cm³ and a cover layer being a long or continuous fibre reinforced thermoplastic plastic film with the long or continuous fibres being orientated approximately parallel to one another.

The product of the invention has an optimum combination of good mechanical properties and surface quality. Of importance is further that its coefficient of thermal expansion (CTE) is very low. For products of the invention where the substrate is covered at each side with several cover layers wherein the orientation of the long or continuous fibres in each adjacent cover layer is different it is possible to obtain a product that for practical purposes can be considered as isotropic.

The thermoplastic material in the substrate and in the cover layer can be the same or can be different. The thermoplastic can be chosen among all known thermoplastic materials.

The product of the invention can be shaped by heating the multilayer product and pressing it or vacuum consolidating it in a mould having the desired shape.

It can be painted with or without an intermediate surface treatment such as applying a primer, flame treatment and the like.

### DETAILED DESCRIPTION OF THE INVENTION

The multilayer product of the invention comprises a substrate that is provided at each side with at least one cover layer.

The substrate is formed by a glass fibre reinforced thermoplastic product with randomly distributed fibres and with a density of less than 1.20, preferably less than 1.00 gram per cm³.

The cover layer is formed by a long or continuous fibre reinforced thermoplastic film, the fibres being oriented approximately parallel to one another within each layer.

### THE SUBSTRATE

Substrates of the kind described above are well-known and commercially available products. They can be manufactured in various ways. They can be made by a process similar to paper making wherein the reinforcing fibres and the thermoplastic material are mixed together into an aqueous solution, subsequently the water is removed by vacuum. The so obtained sheet like product is dried and is heated and finally pressed whereby the thermoplastic material softens and keeps the fibres together upon cooling. A description of this process can be found in US 4,734,321.

In another process for making suitable substrates reinforcing fibres and fibres of a thermoplastic material are admixed and the obtained structure is needled. The needled structure is heated and finally pressed to an intermediate product. This process is described for instance in WO 02/076711.

The content of reinforcing fibres in the substrate can vary within a broad range. The content of reinforcing fibres varies usually between 20 to 90 % by weight.

The fibres have an average length of about 7 to 200 millimetres.

The substrates have a low density and are air permeable. The substrate usually has a thickness of between 1 to 10 millimetres.

### THE COVER LAYER

The cover layer or cover layers is/are formed by a long or continuous fibre reinforced thermoplastic film or prepreg with the long or continuous fibres being orientated approximately parallel to another. Such films are commercially available.

The films can be made for example drawing a plurality of continuous filaments through a melt of a thermoplastic polymer with a relatively low melt viscosity while keeping the filaments aligned along the direction of the draw under tension. Such a process has been described for instance in EP A- 0 056 703. The average length of the long fibres is over 100 millimetres. The fibres are individually embedded in the thermoplastic material. The thickness of the film varies between about 0.1 and 1.0 millimetres.

### THE REINFORCING FIBERS

The material of the reinforcing fibres in the substrate and in the cover layer can be the same or can be different. The fibres can be made out of glass (all types of glass are suitable), carbon, synthetic materials, mineral or natural materials.

### THE THERMOPLASTIC MATERIAL

The thermoplastic material of the substrate and of the cover layer can be the same or can be different. They should however be selected so that the substrate and the cover layer bond together upon heating them under pressure and at elevated temperatures. Suitable thermoplastic materials are for example polyolefins, polycarbonates, vinyl aromatic homopolymers, vinyl aromatic compounds containing copolymers, vinyl aromatic compounds containing graft copolymers or vinyl aromatic compounds containing block copolymers, thermoplastic polyesters, thermoplastic polyurethanes, polyetherimides; polyphenylene sulfide, polyphenylene ethers, polyamides or blends of thermoplastic materials comprising at least one of the mentioned thermoplastic materials.

### PROCESS FOR MAKING THE MULTILAYER PRODUCT

The manufacture of the multilayer product of the invention is relatively simple. On both sides of the substrate as defined in the claims are applied one or more layers of the film. To prevent distortions of the rnulitlayer product of the invention it is simplest to apply on each side of the substrate the same number of films and with a balanced orientation. When using more than one layer of the film the film is usually applied such that the direction of the long or continuous fibres of each subsequent layer differs from the orientation of the previous layer. This is normally as a 0°/90° lay-up but may also be uni-directional or quasi isotropic lay-up depending on the application. The substrate and the film are heated together under pressure at a temperature to assure good bonding between the substrate and the film or prepreg layer. During this process or in a subsequent step the multilayer product may be moulded into the desired three dimensionally shaped forms by pressing or vacuum consolidating it in a properly shaped mould. It is also possible to subject the substrate to a treatment under heat and pressure prior to applying the film cover layer.

### PAINTING THE MULTILAYER PRODUCT

The multilayer product may be painted with one or more paint layers. To obtain an optimal surface quality and good adherence of the paint layers a pre-treatment of the surface of the multilayer product may be advisable. Such pre-treatment may consist for example of the application of suitable primer layer and or surface flame treatment.

### USE OF PRODUCT INVENTION

The products of the invention can be used in many applications. Due to their low density, great stiffness, low CTE and good surface quality they are ideally suited for use as body panels for the automotive industry or outdoor vehicles.

## Claims

1. Multilayer product made out of a substrate and at each side at least one cover layer, completely or partly covering the substrate, the substrate being a fibre reinforced thermoplastic product with randomly distributed fibres and with a density of less than 1.2 grams per cm³, preferably less than 1.0 grams per cm³ and the cover layer being a long or continuous fibre reinforced thermoplastic with the fibres being orientated approximately parallel to one another within each balanced layer.

2. Multilayer products of claim 1 wherein the thermoplastic material of the substrate and the cover layer comprise compatible thermoplastic material.

3. Multilayer product of claim 1 with a substrate with fibres having an average length of between about 7 and 200 millimetres.

4. Multilayer product of claim 1 with a cover layer having long or continuous fibres with an average length of at least 100 millimetres.

5. Multilayer product of claim 1 with a cover layer with long or continuous fibres, which are each individually embedded in the thermoplastic material.

6. Multilayer product of claim 1 with a substrate with a thickness between 1.0 and 10.0 millimetres.

7. Multilayer products of claim 1 with cover layers with a thickness of between 0.1 and 5 millimetres.

8. Process for the manufacture of a multilayer product by covering a substrate at each side at least partly with at least one film or prepreg layer, the substrate being a fibre reinforced thermoplastic product with randomly distributed fibres and with a density of less than 1.2 grams per cm³, preferably less than 1.0 grams per cm³ and the cover layer being a long or continuous fibre reinforced thermoplastic with the fibres being orientated approximately parallel to one another within each layer.

9. Process of claim 8 comprising at least one additional step of heating the multilayer product covered with the cover layers under pressure in a mould corresponding with the desired shape of the product at a temperature above the glass transition temperature of the thermoplastic material in the substrate.

10. Process of claim 8 comprising the step to heat the substrate under pressure before applying the cover layers.

11. Painted multilayer product made out of a substrate and at each side at least one cover layer, the substrate being a fibre reinforced thermoplastic product with randomly distributed fibres and with a density less than 1.2 grams per cm³, preferably less than 1.0 grams per cm³ and the cover layer or layers being a long or continuous fibre reinforced thermoplastic with the fibres being orientated approximately parallel to one another within each layer, provided at least on one side with at least one paint layer.

12. Painted multilayer product of claim 11 with a primer layer between the outer cover layer and the paint layer or layers.

13. Process for painting a multilayer product made out of a substrate and at each side at least one cover layer, the substrate being a glass fibre reinforced thermoplastic product with randomly distributed fibres and with a density less than 1.2 grams per cm³, preferably less than 1.0 grams per cm³ and the cover layer being a long or continuous fibre reinforced thermoplastic plastic film with the fibres being orientated approximately parallel to one another, by optionally providing the surface to be painted by a primer and by optionally giving the surface to be painted a surface treatment followed by application of one or more paint layers.

## Patentansprüche

1. Mehrlagen-Produkt, hergestellt aus einem Substrat und auf jeder Seite mindestens einer Deckschicht, die das Substrat vollständig oder teilweise bedeckt, wobei das Substrat ein faserverstärktes Thermoplast-Produkt mit zufällig verteilten Fasern und mit einer Dichte von weniger als 1,2 Gramm pro cm³, vorzugsweise mit weniger als 1,0 Gramm pro cm³ ist, und wobei die Deckschicht ein mit langen oder kontinuierlichen Fasern verstärkter thermoplastischer Kunststoff ist, bei dem die Fasern innerhalb jeder abgestimmten Schicht annähernd parallel zueinander orientiert sind.

2. Mehrlagen-Produkt nach Anspruch 1, wobei das thermoplastische Material des Substrats und der Deckschicht kompatibles thermoplastisches Material umfasst.

3. Mehrlagen-Produkt nach Anspruch 1 mit einem Substrat mit Fasern, die eine mittlere Länge zwischen ungefähr 7 und 200 Millimetern haben.

4. Mehrlagen-Produkt nach Anspruch 1 mit einer Deckschicht, die lange oder kontinuierliche Fasern mit einer mittleren Länge von mindestens 100 Millimetern hat.

5. Mehrlagen-Produkt nach Anspruch 1 mit einer Deckschicht mit langen oder kontinuierlichen Fasern, die jede einzeln in das thermoplastische Material eingebettet sind.

6. Mehrlagen-Produkt nach Anspruch 1 mit einem Substrat mit einer Dicke zwischen 1,0 und 10,0 Millimetern.

7. Mehrlagen-Produkt nach Anspruch 1 mit Deckschichten mit einer Dicke zwischen 0,1 und 5 Millimetern.

8. Prozess zur Herstellung eines Mehrlagen-Produktes durch Abdecken eines Substrates auf jeder Seite mindestens teilweise mit mindestens einer Film- oder Prepregschicht, wobei das Substrat ein faserverstärktes Thermoplast-Produkt mit zufällig verteilten Fasern und mit einer Dichte von weniger als 1,2 Gramm pro cm³, vorzugsweise mit weniger als 1,0 Gramm pro cm³ ist, und wobei die Deckschicht ein mit langen oder kontinuierlichen Fasern verstärkter thermoplastischer Kunststoff ist, bei dem die Fasern in jeder Schicht annähernd parallel zueinander orientiert sind.

9. Prozess nach Anspruch 8, der mindestens einen zusätzlichen Schritt des Heizens des Mehrlagen-Produktes, das mit den Deckschichten bedeckt ist, unter Druck in einer Form, die der gewünschten Gestalt des Produktes entspricht, auf eine Temperatur über der Glasumwandlungstemperatur des thermoplastischen Materials im Substrat umfasst.

10. Prozess nach Anspruch 8, der den Schritt umfasst, das Substrat unter Druck zu erhitzen, bevor die Deckschichten aufgebracht werden.

11. Angestrichenes Mehrlagen-Produkt, hergestellt aus einem Substrat und auf jeder Seite mindestens einer Deckschicht, wobei das Substrat ein faserverstärktes Thermoplast-Produkt mit zufällig verteilten Fasern und mit einer Dichte von weniger als 1,2 Gramm pro cm³, vorzugsweise mit weniger als 1,0 Gramm pro cm³ ist, und wobei die Deckschicht oder die Deckschichten ein mit langen oder kontinuierlichen Fasern verstärkter thermoplastischer Kunststoff sind, bei dem die Fasern innerhalb jeder Schicht annähernd parallel zueinander orientiert sind, der auf mindestens einer Seite mit mindestens einer Farbschicht ausgestattet ist.

12. Angestrichenes Mehrlagen-Produkt nach Anspruch 11 mit einer Grundierungsschicht zwischen der äußeren Deckschicht und der Farbschicht oder den Farbschichten.

13. Prozess zum Anstreichen eines Mehrlagen-Produktes, das aus einem Substrat und auf jeder Seite mindestens einer Deckschicht hergestellt ist, wobei das Substrat ein faserverstärktes Thermoplast-Produkt mit zufällig verteilten Fasern und mit einer Dichte von weniger als 1,2 Gramm pro cm³, vorzugsweise mit weniger als 1,0 Gramm pro cm³ ist, und wobei die Deckschicht eine mit langen oder kontinuierlichen Fasern verstärkte thermoplastische Kunststoffschicht ist, bei der die Fasern annähernd parallel zueinander orientiert sind, indem die anzustreichende Oberfläche optional mit einer Grundierungsschicht versehen wird, und wobei die anzustreichende Oberfläche optional eine Oberflächenbehandlung erhält, auf die das Aufbringen einer oder mehrerer Farbschichten folgt.

## Revendications

1. Produit multicouche fabriqué à partir d'un substrat et de chaque côté au moins une couche de couverture, recouvrant totalement ou partiellement le substrat, le substrat étant un produit thermoplastique renforcé de fibres comprenant des fibres réparties de façon aléatoire et présentant une densité inférieure à 1,2 gramme par cm³, de préférence inférieure à 1,0 gramme par cm³, et la couche de couverture étant un thermoplastique renforcé de fibres longues ou continues dont les fibres sont orientées de telle sorte qu'elles sont approximativement parallèles les unes aux autres au sein de chaque couche équilibrée.

2. Produit multicouche selon la revendication 1, dans lequel le matériau thermoplastique du substrat et de la couche de couverture comprend un matériau thermoplastique compatible.

3. Produit multicouche selon la revendication 1, comprenant un substrat dont les fibres présentent une longueur moyenne comprise entre environ 7 et 200 millimètres.

4. Produit multicouche selon la revendication 1, comprenant une couche de couverture présentant des fibres longues ou continues présentant une longueur moyenne d'au moins 100 millimètres.

5. Produit multicouche selon la revendication 1, comprenant une couche de couverture comprenant des fibres longues ou continues, chacune étant individuellement intégrée dans le matériau thermoplastique.

6. Produit multicouche selon la revendication 1, comprenant un substrat présentant une épaisseur comprise entre 1,0 et 10,0 millimètres.

7. Produit multicouche selon la revendication 1, comprenant des couches de couverture présentant une épaisseur comprise entre 0,1 et 5 millimètres.

8. Procédé de fabrication d'un produit multicouche consistant à recouvrir un substrat de chaque côté au moins partiellement avec au moins un film ou une couche préimprégnée, le substrat étant un produit thermoplastique renforcé de fibres comprenant des fibres réparties de façon aléatoire et présentant une densité inférieure à 1,2 grammes par cm³, de préférence inférieure à 1,0 gramme par cm³, et la couche de couverture étant un thermoplastique renforcé de fibres longues ou continues dont les fibres sont orientées de telle sorte qu'elles sont approximativement parallèles les unes aux autres au sein de chaque couche.

9. Procédé selon la revendication 8, comprenant au moins une étape supplémentaire consistant à chauffer le produit multicouche recouvert des couches de couverture, sous pression, dans un moule correspondant à la forme souhaitée du produit, à une température supérieure à la température de transition vitreuse du matériau thermoplastique dans le substrat.

10. Procédé selon la revendication 8, comprenant l'étape consistant à chauffer le substrat sous pression avant d'appliquer les couches de couverture.

11. Produit multicouche peint fabriqué à partir d'un substrat et de chaque côté au moins une couche de couverture, le substrat étant un produit thermoplastique renforcé de fibres comprenant des fibres réparties de façon aléatoire et présentant une densité inférieure à 1,2 grammes par cm³, de préférence inférieure à 1,0 gramme par cm³, et la ou les couche(s) de couverture étant un thermoplastique renforcé de fibres longues ou continues dont les fibres sont orientées de telle sorte qu'elles sont approximativement parallèles les unes aux autres au sein de chaque couche, au moins une couche peinte étant prévue sur au moins un côté.

12. Produit multicouche peint selon la revendication 11, comprenant une couche de base entre la couche de couverture extérieure et la ou les couche(s) peinte(s).

13. Procédé pour peindre un produit multicouche fabriqué à partir d'un substrat et de chaque côté au moins une couche de couverture, le substrat étant un produit thermoplastique renforcé de fibres comprenant des fibres réparties de façon aléatoire et présentant une densité inférieure à 1,2 grammes par cm³, de préférence inférieure à 1,0 gramme par cm³, et la couche de couverture étant un thermoplastique renforcé de fibres longues ou continues dont les fibres sont orientées de telle sorte qu'elles sont approximativement parallèles les unes aux autres, une couche de base étant optionnellement prévue sur la surface à peindre ou un traitement de surface suivi par une application d'une ou plusieurs couche(s) de peinture étant optionnellement effectué sur la surface à peindre.
